(19) Europäisches Patentamt
European Patent Office
Office européen des brevets

(11) **EP 3 874 926 B1**

(12) **EUROPEAN PATENT SPECIFICATION**

(45) Date of publication and mention
of the grant of the patent:
**21.12.2022 Bulletin 2022/51**

(51) International Patent Classification (IPC):
***A01B 69/04*** *(2006.01)* *B62D 15/02* *(2006.01)*
*B62D 6/00* *(2006.01)*

(21) Application number: **19878452.2**

(22) Date of filing: **30.10.2019**

(52) Cooperative Patent Classification (CPC):
**A01B 69/008;** B62D 6/002; B62D 15/025

(86) International application number:
**PCT/JP2019/042504**

(87) International publication number:
**WO 2020/090863 (07.05.2020 Gazette 2020/19)**

(54) **ERROR CORRECTION APPARATUS**

VORRICHTUNG ZUR FEHLERKORREKTUR

APPAREIL DE CORRECTION D'ERREUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2018 JP 2018203759**

(43) Date of publication of application:
**08.09.2021 Bulletin 2021/36**

(73) Proprietor: **Tokyo Keiki Inc.
Tokyo 144-8551 (JP)**

(72) Inventors:
• **YOSHIDA, Toyoori**
**Tokyo 144-8551 (JP)**
• **ARAKANE, Hiroomi**
**Tokyo 144-8551 (JP)**
• **FUNAYAMA, Masayuki**
**Tokyo 144-8551 (JP)**
• **OKAMURA, Nobuyuki**
**Tokyo 144-8551 (JP)**
• **UCHIDA, Akinobu**
**Tokyo 144-8551 (JP)**
• **KAYA, Kazuki**
**Tokyo 144-8551 (JP)**

(74) Representative: **2SPL Patentanwälte PartG mbB
Landaubogen 3
81373 München (DE)**

(56) References cited:
EP-A1- 2 980 668      WO-A1-2014/155893
WO-A1-2017/208306     JP-A- 2003 303 021
US-A1- 2007 260 370   US-A1- 2008 086 249
US-A1- 2008 195 268   US-A1- 2008 195 268
US-A1- 2009 164 067   US-A1- 2009 164 067
US-A1- 2017 350 721

## Description

### Technical Field

The present invention relates to correction of measurement values obtained by a sensor device mounted in a working vehicle.

### Background Art

To improve the efficiency of farm work, automatic steering control that makes a working vehicle such as a tractor or a rice planting machine follow a designated traveling route has been performed. In this automatic steering control, the steering of a working vehicle is controlled so as not to make the working vehicle deviate from the traveling route based on the separation distance between a target position on the traveling route and the actual position of the working vehicle.

As a technology concerning the automatic steering of a working vehicle, an automatic steering system as described in Patent Document JP 2018-120364 A is known. This automatic steering device includes: a satellite positioning module that outputs location information based on satellite information from a satellite; a forward travel reference position calculation part that calculates a forward travel reference position as a reference position for steering control of a working vehicle during forward travel based on location information; a rearward travel reference position calculation part that calculates a rearward travel reference position as a reference position for steering control of the working vehicle during rearward travel based on the location information; a steering control part that outputs a steering control signal for forward travel calculated during forward travel based on a deviation between a traveling route and the forward reference position and outputs a steering control signal for rearward travel calculated during rearward travel based on a deviation between the traveling route and the rearward reference position; and a steering mechanism that steers the working vehicle based on the steering control signal for forward travel and the steering control signal for rearward travel.

Documents EP 2 980 668 A1, US 2017/350721 A1, US 2009/164067 A1,

WO 2017/208306 A1, US 2007/260370 A1 and US 2008/195268 A1 describe known error correcting devices for working vehicles.

## Disclosure of the Invention

### Problems to be Solved by the Invention

In the automatic steering control as described above, a GNSS (Global Navigation Satellite System) sensor for measuring the position of a working vehicle is mounted at an appropriate position for receiving a GNSS signal from a satellite. The proper position for receiving the GNSS signal in a working device is the upper end portion of an arm mounted so as to extend upward from the vehicle body or a roof portion supported on the arm by being connected to the upper end thereof.

When a working vehicle travels a rugged farm field, the posture thereof tilts. In this case, since the GNSS sensor is mounted at such a high location, an error is generated between the position measured by the GNSS sensor and the actual position of the working vehicle on the farm field, which in turn deteriorates accuracy of automatic steering control.

The present invention has been made to solve the above problem, and the object thereof is to provide an error correcting device capable of reducing an error in the position of a working vehicle measured by the GNSS sensor.

### Means for Solving the Problems

To solve the above problem, an error correcting device according to the present embodiment is provided which is mounted in a working vehicle and corrects an error in measurement value of a sensor device having a GNSS sensor and a gyro sensor. The error correcting device includes: a first acquisition part that acquires a vehicle position of the working vehicle in a local coordinate system, the vehicle position being measured by the GNSS sensor, and an angular velocity in a sensor coordinate system having three axes set with reference to the sensor device, the angular velocity being measured by the gyro sensor; a coordinate transformation part that coordinate-transforms, based on the acquired angular velocity, a relative position vector of a measurement position in the sensor coordinate system at which the sensor device is provided, the relative position vector extending from a set position set at a different position from the position of the sensor device in the sensor coordinate system, to a relative position vector in the local coordinate system; and a vehicle position correcting part that calculates a position vector $P_a$ of the set position extending from an origin of the local coordinate system according to an expression of $P_a = P_s - L$, wherein $P_s$ denotes a position vector of the measurement position and L denotes the coordinate-transformed relative position vector, to correct an error in the vehicle position measured by the GNSS sensor.

**Advantageous Effects of the Invention**

According to the present invention, it is possible to reduce an error in the vehicle position of the working vehicle measured by the GNSS sensor.

**Brief Description of the Drawings**

FIG. 1 is a schematic side view illustrating the configuration of a farm tractor according to an embodiment.
FIG. 2 is a block diagram illustrating the entire configuration of a control system according to the embodiment.
FIG. 3 is a block diagram illustrating the hardware configuration of an error correcting device.
FIG. 4 is a block diagrams illustrating the functional configuration of the error correcting device.
FIG. 5 is a flowchart illustrating the operation of the error correcting device.
FIG. 6 is a schematic front view illustrating a relative position vector.
FIG. 7 is a schematic plan view illustrating the relative position vector.
FIG. 8 is a schematic front view illustrating a velocity vector.

**Mode for Carrying Out the Invention**

Hereinafter, an embodiment of the present invention will be described with reference to the drawings.

(Configuration of Working Vehicle)

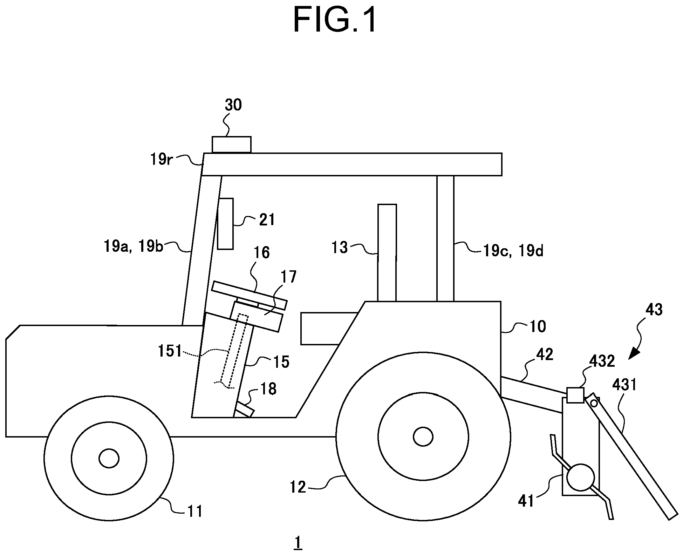

A working vehicle provided with an error correcting device according to the present embodiment will be described. FIG. 1 is a schematic side view illustrating the configuration of a farm tractor according to the present embodiment.
A vehicle to be steered by an automatic steering system according to the present embodiment is a working vehicle, specifically, a farm tractor 1 as illustrated in FIG. 1. The tractor 1 is a four-wheeled vehicle having a vehicle body 10, two front wheels 11, and two rear wheels 12. However, the present invention may be applied to any steerable vehicle. The tractor 1 further has a driver's seat 13, a steering column 15, a steering wheel 16, a steering drive device 17, a pedal group 18 including an accelerator pedal, a brake pedal, and other pedals, and four support frames 19a to 19d, and a roof part 19r.
The steering column 15 incorporates a steering system that gives a deflection angle to the front wheels 11 to steer the tractor 1 and an input shaft 151 configured to input a steering angle given by the steering wheel 16 or steering drive device 17 to the steering system, and a steering angle based on the rotation of the input shaft 151 is given to the front wheels 11. The steering drive device 17 is an add-on device provided to automatically steer the tractor 1 which does not have a configuration for automatic steering control and assumes manual steering. The upper portion of the steering drive device 17 is mounted with the steering wheel 16, and the lower portion thereof is engaged with the upper end portion of the input shaft 151 of the steering system. On the vehicle body 10, the four support frames 19a to 19d each having an elongate shape are disposed at the front, rear, left, and right positions on the vehicle body 10 in an erected state, and the roof part 19r, which is formed into a substantially flat plate shape as a whole, is placed on the four support frames 19a to 19d.
The sensor device 30 is mounted on the upper surface of the roof part 19r with the roof part 19r as a base. The sensor device 30 includes a GNSS sensor as described later and is thus preferably mounted to the uppermost portion of the tractor 1 like the roof part 19r so as to receive a GNSS signal transmitted from a satellite. When the tractor 1 does not have the roof part 19r, the sensor device 30 may be mounted with any one of the four support frames 19a to 19d for supporting the roof part 19r as a base. Further, an automatic steering controller 21 is mounted on one of the front support frames 19a and 19b. The automatic steering controller 21 controls automatic steering of the tractor 1.
The tractor 1 has a rotary cultivator 41 as a working machine attached to the working vehicle, a link mechanism 42 that vertically movably connects the rotary cultivator 41 to the tractor 1, and a grounding sensor 43 that detects a distance between the rotary cultivator 41 and a firm field as a plowing depth position. The grounding sensor 43 includes a grounding part 431 vertically swingably mounted about the upper end portion thereof so as to bring the lower end portion thereof into contact with the farm field and a detection part 432 that detects swing displacement of the grounding part 431.

(Configuration of Control System)

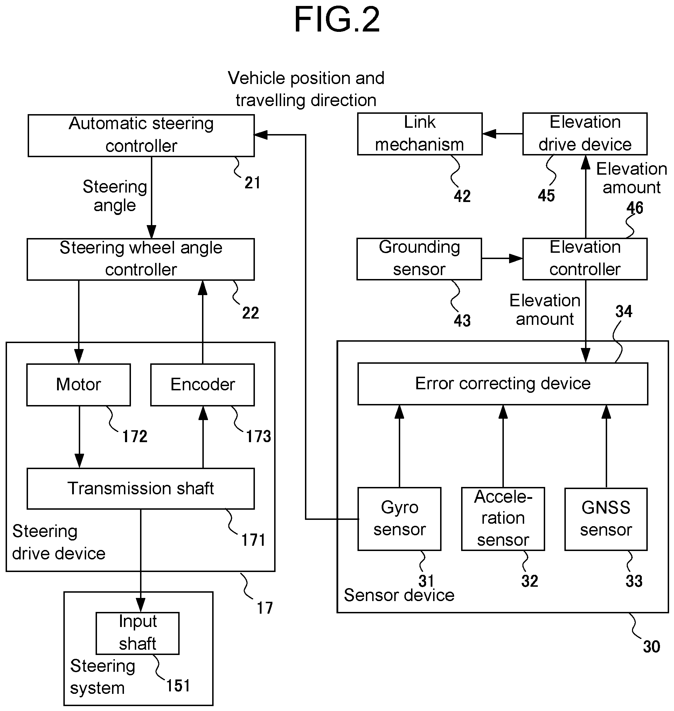

FIG. 2 is a block diagram illustrating the entire configuration of a control system according to the present embodiment.

The control system provided in the tractor 1 includes an automatic steering control system and a plowing depth control system. As illustrated in FIG. 2, the automatic steering control system is constituted of the steering drive device 17 that drives the input shaft 151 in the steering system, the sensor device 30, the automatic steering controller 21, and a steering wheel angle controller 22 which is not illustrated in FIG. 1. The plowing depth control system is constituted of an elevation drive device 45 that vertically moves the rotary cultivator 41 through the link mechanism 42 and an elevation controller 46 that controls the elevation drive device 45 based on the plowing depth position of the rotary cultivator 41 detected by the grounding sensor 43.

The steering drive device 17 includes a transmission shaft 171 that transmits drive force to the input shaft 151, a motor 172 which is a stepping motor for driving the transmission shaft 171, and an encoder 173 which is a rotary encoder for detecting the rotation amount and rotation position of the transmission shaft 171. The motor 172 may be of any type as long as it can output a torque sufficient to rotate the input shaft 151.

The automatic steering controller 21 outputs a steering angle based on a measurement value from the sensor device 30, and the steering wheel angle controller 22 feedback controls the steering drive device 17 based on the steering angle issued from the automatic steering controller 21. The steering drive device 17 drives the transmission shaft 171 while controlling the motor 172 such that a rotation position detected by the encoder 173 coincides with a desired rotation position.

Thus, by installing the steering drive device 17, the sensor device 30, the automatic steering controller 21, and the steering wheel angle controller 22 as add-on devices to the tractor 1, automatic steering can be achieved in the tractor 1 configured to be manually steered.

The sensor device 30 includes a gyro sensor 31, an acceleration sensor 32, a GNSS sensor 33, and an error correcting device 34, which are housed in the same enclosure. This means that the gyro sensor 31, the acceleration sensor 32, and the GNSS sensor 33 are provided at substantially the same position in the tractor 1. The gyro sensor 31 detects angular velocities about three axes to measure an azimuth angle $\xi$, a pitch angle $\theta$, and a roll angle $\phi$. The acceleration sensor 32 measures acceleration about three axes. The GNSS sensor 33 measures a vehicle position which is the position of the tractor 1 and the velocity vector of the tractor 1. The error correcting device 34 corrects errors in the measurement values of the gyro sensor 31, acceleration sensor 32, and GNSS sensor 33.

The automatic steering controller 21 calculates, based on a vehicle position which is the position of the tractor 1 detected by the GNSS sensor 33 and a set target traveling route, a target traveling direction which is a traveling direction of the tractor 1 that makes the vehicle position coincide with the target traveling route and calculates a steering angle based on a traveling direction deviation which is a deviation between the target traveling direction calculated as described above and the traveling direction of the tractor 1 which is based on the velocity vector measured by the GNSS sensor 33 and outputs the calculated steering angle to the steering wheel angle controller 22.

The elevation controller 46 calculates an elevation amount for the rotary cultivator 41 to maintain a constant plowing depth position based on the plowing depth position detected by the grounding sensor 43 and outputs the calculated elevation amount to the elevation drive device 45. The elevation controller 46 outputs an elevation amount that elevates the rotary cultivator 41 when the front and rear wheels 11 and 12 sink into the farm field by the own weight of the tractor 1 and outputs an elevation amount that lowers the rotary cultivator 41 when the front and rear wheels 11 and 12 escape from the sinking state. The elevation controller 46 outputs such elevation amounts also to the error correcting device 34.

(Configuration of Error Correcting Device)

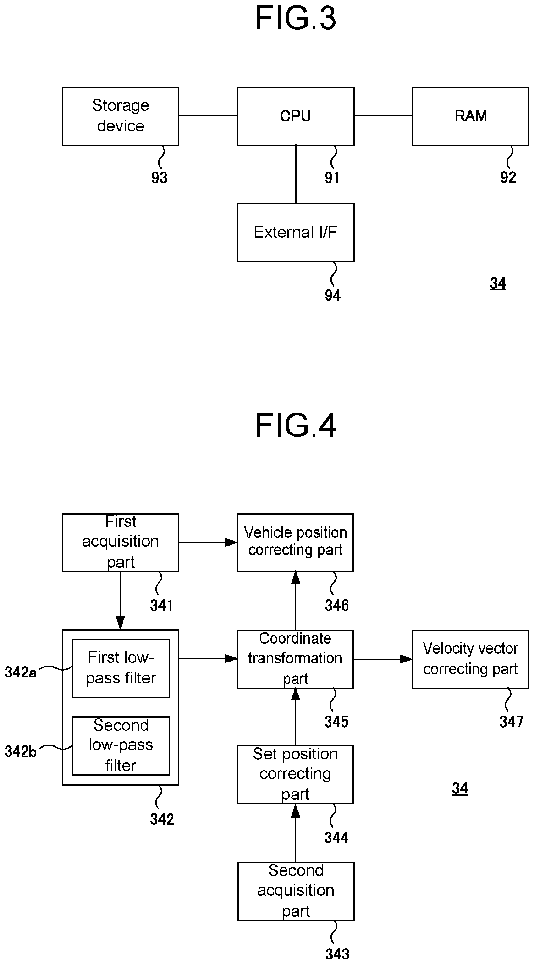

The hardware configuration and functional configuration of the error correcting device will be described. FIGS. 3 and 4 are block diagrams illustrating the hardware configuration and functional configuration of the error correcting device, respectively.

As illustrated in FIG. 3, the error correcting device 34 has, as hardware, a CPU (Central Processing Unit 91, a RAM (Random Access Memory) 92, a storage device 93, and an external I/F (Interface) 94.

The CPU 91 and RAM 92 execute various functions to be described later in cooperation with each other, and the storage device 93 stores various data used in processing executed by the various functions. The external I/F 94 performs input and output of data to and from the gyro sensor 31, acceleration sensor 32, GNSS sensor 33, and automatic steering controller 21. The automatic steering controller 21 also has a CPU, a RAM, a storage device, and an external I/F, and may execute various functions to be described later in place of the error correcting device.

Further, as illustrated in FIG. 4, the error correcting device 34 includes, as functional components, a first acquisition part 341, a low-pass filter 342 having a first low-pass filter 342a and a second low-pass filter 342b, a second acquisition part 343, a set position correcting part 344, a coordinate transformation part 345, a vehicle position correcting part 346, a velocity vector correcting part 347.

The first acquisition part 341 acquires measurement values obtained by the gyro sensor 31, acceleration sensor 32, and GNSS sensor 33. The second acquisition part 343 acquires the elevation amount output from the elevation controller 46.

The first low-pass filter 342a reduces a high-frequency signal higher than a preset first cutoff frequency in the time-series signal of the measurement value obtained by the gyro sensor 31 which is acquired by the first acquisition part 341. The second low-pass filter 342b reduces a high-frequency signal higher than a preset second cutoff frequency in the time-series signal of the measurement value obtained by the acceleration sensor 32 which is acquired by the first acquisition part 341.

As described above, the sensor device 30 includes the GNSS sensor 33. Thus, it is preferable to mount the sensor device 30 to any one of the four support frames 19a to 19d or the roof part 19r supported by the support frames 19a to 19d in order to receive the GNSS signal. In a working vehicle like the tractor 1, a member for supporting the roof like the four support frames 19a to 19d used in the present embodiment is insufficient in rigidity, so that particularly when the working vehicle travels a rugged road, a high-frequency amplitude is applied to the sensor device 30. Such a high-frequency amplitude causes errors in the measurement values of, particularly, the gyro sensor 31 and acceleration sensor 32; however, in the present embodiment, such errors can be reduced by the low-pass filter 342.

The coordinate transformation part 345 coordinate-transforms a relative position vector and an angular velocity vector in a sensor coordinate system into vectors, respectively, in a local coordinate system. The sensor coordinate system is a coordinate system having three axes of x, y and z perpendicular to one another with the mounting position of the sensor device 30, i.e., a position at which measurement is performed by the sensor device 30 as an origin. The x-axis is directed forward in the traveling direction of the tractor 1, the y-axis is directed right in the width direction of the tractor 1, and the z-axis is directed downward in the vertical direction of the tractor 1. The local coordinate system is a coordinate system having three axes directed to north, east, and downward. The relative position vector and the angular velocity vector will be described later in detail.

The vehicle position correcting part 346 corrects a vehicle position of the tractor 1 in the local coordinate system which is measured by the GNSS sensor 33 at the measurement position of the sensor device 30 mounted on the roof part 19r in the present embodiment to a vehicle position of the tractor 1 at a set position which is set in advance in the sensor coordinate system.

The set position is a position obtained by projecting the measurement position of the sensor device 30 to the traveling surface of the tractor 1, i.e., the surface of a farm field. Specifically, in the present embodiment, the set position is set at the width-direction center of the tractor 1 in terms of the y-direction and at the lower end of the front and rear wheels 11 and 12 or in the vicinity of the lower end above the lower end in terms of the z-direction.

The velocity vector correcting part 347 corrects the velocity vector of the tractor 1 in the local coordinate system measured by the GNSS sensor 33 at the measurement position of the sensor device 30 to a velocity vector at the set position.

(Operation of Error Correcting Device)

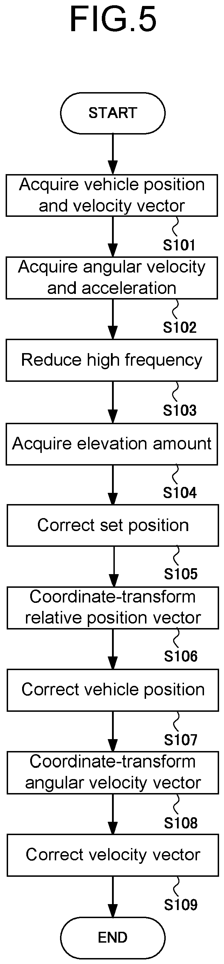

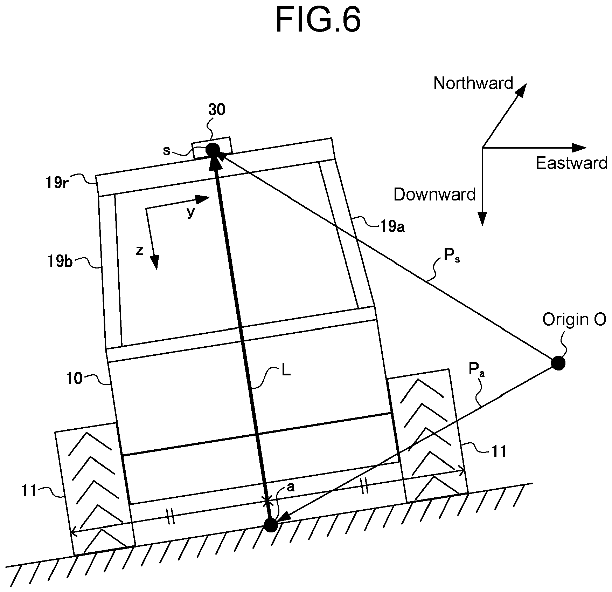

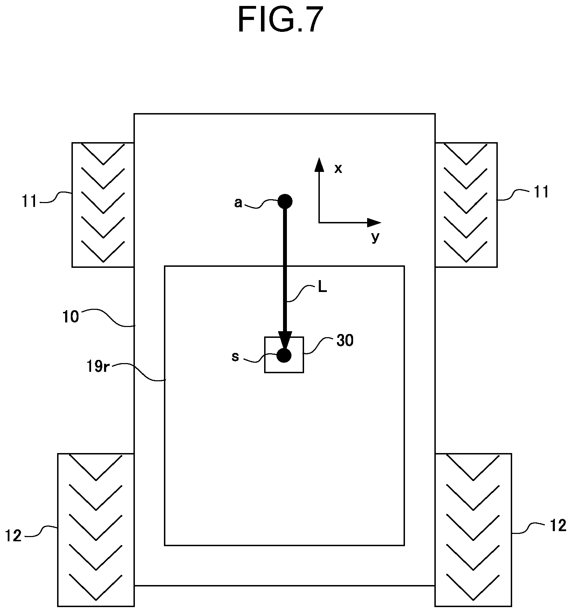

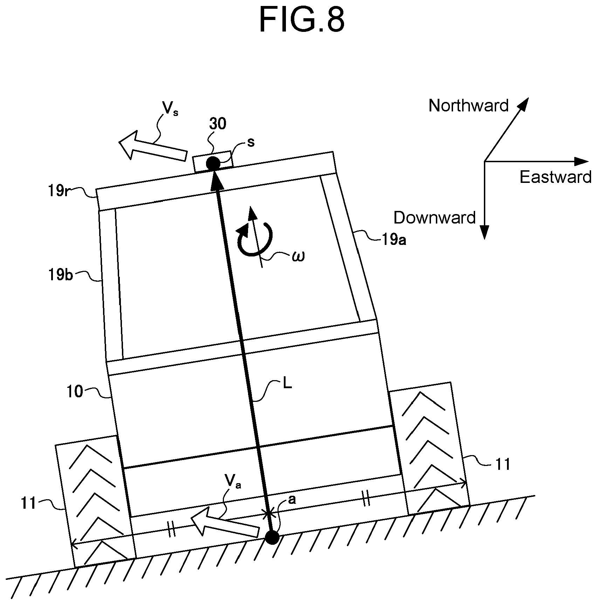

The following describes the operation of the error correcting device. FIG. 5 is a flowchart illustrating the operation of the error correcting device. FIGS. 6 and 7 are respectively schematic front and plan views illustrating the relative position vector. FIG. 8 is a schematic front view illustrating the velocity vector. The operation illustrated in FIG. 5 is executed every predetermined period.

As illustrated in FIG. 5, the first acquisition part 341 acquires the vehicle position and velocity vector in the local coordinate system measured by the GNSS sensor 33 (S101) and acquires the angular velocity of the tractor 1 measured by the gyro sensor 31 and the acceleration of the tractor 1 measured by the acceleration sensor 32 (S102).

Then, the low-pass filter 342 reduces a high-frequency signal higher than the preset first and second cutoff frequencies in each of the angular velocity and acceleration acquired by the first acquisition part 341 (S103).

Then, the second acquisition part 343 acquires the elevation amount output from the elevation controller 46 (S104), and the set position correcting part 344 corrects the set position on the z-axis based on the elevation amount acquired by the second acquisition part 343 (S105).

The following describes the correction of the set position performed by the set position correcting part 344. As described above, the set position is a position set in advance in the vicinity of the lower ends of the front and rear wheels 11 and 12 of the tractor 1 on the z-axis of the sensor coordinate system as a position obtained by projecting the measurement position of the sensor device 30 to the farm field surface. When at least one of the front and rear wheels 11 and 12 significantly sink into the farm field, the relative distance on the z-axis between the measurement position and the farm field surface as the traveling surface of the tractor 1 becomes smaller than the relative distance on the z-axis between the measurement position and the set position. Further, the condition of the farm field is not always uniform and varies from position to position, so that the relative distance on the z-axis between the measurement position and the farm field surface varies during traveling of the tractor 1.

The set position correcting part 344 calculates, based on the elevation amount, the vertical position of the rotary cultivator 41 which is subjected to elevation control such that the distance from the farm field surface is maintained constant and corrects the set position on the z-axis such that the relative distance between the measurement position and the set position decreases as the calculated vertical position increases in height. Thus, even when the front and rear wheels 11 and 12 sink into the farm field, the set position can be set to a position obtained by projecting the set position to the farm field surface.

The coordinate transformation part 345 coordinate-transforms a relative position vector $L_s$ of a measurement position s extending from a set position a in the sensor coordinate system into a relative position vector L in the local coordinate system according to the expression of L = CLs based on the azimuth angle, pitch angle, and roll angle of the tractor 1 measured by the gyro sensor 31 (S106) . The C in the above expression denotes a coordinate transformation matrix for coordinate transformation from the sensor coordinate system into the local coordinate system.

The coordinate transformation matrix C is expressed by the following expression.

[Numeral 1]

$$C = \begin{bmatrix} C11 & C21 & C31 \\ C12 & C22 & C32 \\ C13 & C23 & C33 \end{bmatrix}$$

Elements of the coordinate transformation matrix C are defined as follows, wherein $\xi$, $\theta$, and $\phi$, denote azimuth angle, pitch angle, and roll angle, respectively.

[Numeral 2]

$$C11 = \cos \xi \cdot \cos \theta$$
$$C12 = \sin \xi \cdot \cos \theta$$
$$C13 = -\sin \theta$$
$$C21 = -\sin \xi \cdot \cos \phi + \cos \xi \cdot \sin \theta \cdot \sin \phi$$
$$C22 = \cos \xi \cdot \cos \phi + \sin \xi \cdot \sin \theta \cdot \sin \phi$$
$$C23 = \cos \theta \cdot \sin \phi$$
$$C31 = \sin \xi \cdot \sin \phi + \cos \xi \cdot \sin \theta \cdot \cos \phi$$
$$C32 = -\cos \xi \cdot \sin \phi + \sin \xi \cdot \sin \theta \cdot \cos \phi$$
$$C33 = \cos \theta \cdot \cos \phi$$

Prior to the coordinate transformation, initialization processing commonly called alignment is performed. In this initialization processing, the initial direction (azimuth angle) and initial posture (pitch angle and roll angle) of the tractor 1 are determined. Then, in the subsequent coordinate transformation performed by the coordinate transformation part 345, the azimuth angle $\xi$, pitch angle $\theta$, and roll angle $\phi$ updated from the determined initial direction and initial posture based on the angular velocity measured by the gyro sensor 31 are given to the coordinate transformation matrix C.

The pitch angle $\theta$ and a roll angle $\phi$ in the initial posture are determined according to the following expression, wherein gravitational acceleration measured by the acceleration sensor 32 in a stationary state of the tractor 1 is g, and accelerations of the three axes are $a_x$, $a_y$, and $a_z$, respectively.

[Numeral 3]

$$a_x = g \cdot \sin\theta$$
$$a_y = -g \cdot \cos\theta \cdot \sin\phi$$
$$a_z = -g \cdot \cos\theta \cdot \cos\phi$$

The azimuth angle $\xi$ as the initial direction is set based on the velocity vector measured by the GNSS sensor 33 during traveling of the tractor 1. The initial posture and initial direction may be preset values.

After the coordinate transformation, the vehicle position correcting part 346 calculates a position vector $P_a$ of the set position a extending from an origin O of the local coordinate system according to an expression of $P_a = P_s - L$, wherein $P_s$ denotes the position vector of the measurement position s to thereby correct a vehicle position measured at the measurement position s to a vehicle position at the set position a (S107).

Then, the coordinate transformation part 345 uses the coordinate transformation matrix C to coordinate-transform a rotation angular velocity vector $\omega_s$ of the tractor 1 in the sensor coordinate system measured by the gyro sensor 31 into a rotation angular velocity vector $\omega$ in the local coordinate system according to an expression of $\omega = C\omega_s$ (S108).

After the coordinate transformation, the velocity vector correcting part 347 calculates a velocity vector $V_a$ at the set position a according to an expression of $V_a = V_s - \omega \times L$, wherein $V_s$ denotes a velocity vector of the tractor 1 at the measurement position s measured by the GNSS sensor 33 to thereby correct the velocity vector $V_s$ to the velocity vector $V_a$ at the set position a (S109).

As described above, the error correcting device 34 corrects the vehicle position and velocity vector which are measured at the measurement position s to those measured at the set position a. Based on the thus corrected vehicle position and velocity vector, the automatic steering controller 21 can obtain a highly accurate vehicle position, traveling direction, and traveling velocity, wherein errors in the measurement values due to shake of the sensor device 30 generated when the tractor 1 travels on a rugged farm field are reduced. This allows the automatic steering controller 21 to perform accurate automatic steering of the tractor 1.

The working vehicle provided with the sensor device 30 to be subjected to error correction by the error correcting device 34 is not limited to the tractor 1 but includes working vehicles of all types, such as a rice planting machine, a combine, a vegetable transplanter, a vegetable harvester, and a lawn mower, that are provided with a working machine which is subjected to elevation control so as to be brought into contact with the ground.

**Reference Signs List**

| | |
|---|---|
| 34: | Error correcting device |
| 341: | First acquisition part |
| 345: | Coordinate transformation part |
| 346: | Vehicle position correcting part |

**Claims**

**1.** An error correcting device (34) and a working vehicle (1), wherein the error correcting device (34) is mounted in the working vehicle (1) and configured to correct an error in measurement value of a sensor device having a GNSS sensor (33) and a gyro sensor (31), the correcting device (34) comprising:

a first acquisition part (341) that is configured to acquire a vehicle position of the working vehicle in a local coordinate system, the GNSS sensor (33) being configured to measure the vehicle position, and an angular velocity in a sensor coordinate system having three axes set with reference to the sensor device, the gyro sensor (31) being configured to measure the angular velocity, **characterized in that** the correcting device (34) further comprises:

a coordinate transformation part (345) that is configured to coordinate-transform, based on the acquired angular velocity, a relative position vector of a measurement position in the sensor coordinate system at which the sensor device is provided, the relative position vector extending from a set position set at a different position from the position of the sensor device in the sensor coordinate system, to a relative position vector in the local coordinate system; and

a vehicle position correcting part (346) that is configured to calculate a position vector $P_a$ of the set position extending from an origin of the local coordinate system according to an expression of $P_a = P_s - L$, wherein $P_s$ denotes a position vector of the measurement position and L denotes the coordinate-transformed relative position vector, to correct an error in the vehicle position measured by the GNSS sensor (33).

2. The error correcting device (34) and the working vehicle (1) according to claim 1, wherein

the working vehicle (1) has a working machine (41) subjected to elevation control so as to be brought into contact with a farm field,

one axis of the sensor coordinate system is directed in the vertical direction of the working vehicle,

the set position is set in advance to a position obtained by projecting the measurement position to the surface of the farm field,

the error correcting device (34) further has:

a second acquisition part (343) that is configured to acquire an elevation amount used in the elevation control of the working machine 41); and

a set position correcting part (344) that is configured to correct the set position based on the acquired elevation amount, and

the coordinate transformation part (345) is configured to coordinate-transform a relative position vector of the measurement position which extends from the corrected set position.

3. The error correcting device (34) and the working vehicle (1) according to claim 1 or 2, wherein

the first acquisition part (341) is further configured to acquire a velocity vector of the working vehicle (1) in the local coordinate system,

the GNSS sensor (33) being configured to measure the velocity vector,

the coordinate transformation part (345) being further configured to coordinate-transform a rotation angular velocity vector of the working vehicle (1) in the sensor coordinate system, the rotation angular velocity being based on the acquired angular velocity, into a rotation angular velocity vector in the local coordinate system based on the acquired angular velocity, and

the error correcting device (34) further has a velocity vector correcting part (347) being configured to calculate a velocity vector of the working vehicle (1) at the set position according to an expression of $V_a = V_s - \omega \times L$, wherein $V_s$ denotes a velocity vector of the working vehicle at the measurement position, $V_a$ denotes a velocity vector of the working vehicle at the set position, and $\omega$ denotes the coordinate-transformed rotation angular velocity vector, to correct the velocity vector of the working vehicle (1) which the GNSS sensor is configured to measure.

4. The error correcting device (34) and the working vehicle (1) according to any one of claims 1 to 3, wherein the error correcting device (34) further comprises a first low-pass filter (342a) which is configured to reduce a high-frequency signal higher than a preset first cutoff frequency in a time-series signal of an angular velocity measured by the gyro sensor (31),

and the coordinate transformation part being configured to coordinate-transform the relative position vector based on the angular velocity in which the high-frequency signal has been reduced.

5. The error correcting device (34) and the working vehicle (1) according to claim 4, wherein

the sensor device further has an acceleration sensor (32), and

the error correcting device (34) further comprises a second low-pass filter (342b) which is configured to reduce a high-frequency signal higher than a preset second cutoff frequency in a time-series signal of an acceleration measured by the acceleration sensor (32).

**Patentansprüche**

1. Eine Fehlerkorrekturvorrichtung (34) und ein Arbeitsfahrzeug (1), wobei die Fehlerkorrekturvorrichtung (34) in dem Arbeitsfahrzeug (1) befestigt und ausgebildet ist, einen Messwertfehler eines Sensorbauelements mit einem GNSS-Sensor (33) und einem Gyrosensor (31) zu korrigieren, wobei die Korrekturvorrichtung (34) umfasst:

   einen ersten Erfassungsteil (341), der ausgebildet ist, eine Fahrzeugposition des Arbeitsfahrzeugs in einem lokalen Koordinatensystem zu erfassen, wobei der GNSS-Sensor (33) ausgebildet ist, die Fahrzeugposition zu messen, und eine Winkelgeschwindigkeit in einem Sensorkoordinatensystem mit drei Achsen, die in Bezug auf das Sensorbauelement eingestellt sind, wobei der Gyrosensor (31) ausgebildet ist, die Winkelgeschwindigkeit zu messen, **dadurch gekennzeichnet, dass** die Korrekturvorrichtung (34) ferner umfasst:
   einen Koordinatentransformationsteil (345), der ausgebildet ist, basierend auf der erfassten Winkelgeschwindigkeit einen relativen Positionsvektor einer Messposition in dem Sensorkoordinatensystem, an dem das Sensorbauelement bereitgestellt ist, koordinaten-zu-transformieren, wobei sich der relative Positionsvektor von einer eingestellten Position, die an einer von der Position des Sensorbauelements in dem Sensorkoordinatensystem verschiedenen Position eingestellt ist, zu einem relativen Positionsvektor in dem lokalen Koordinatensystem erstreckt; und
   einen Fahrzeugpositionskorrekturteil (346), der ausgebildet ist, einen Positionsvektor $P_a$ der eingestellten Position, der sich von einem Ursprung des lokalen Koordinatensystems gemäß einem Ausdruck $P_a = P_s - L$ erstreckt, wobei $P_s$ einen Positionsvektor der Messposition bezeichnet und L den koordinatentransformierten relativen Positionsvektor bezeichnet, zu berechnen, um einen Fehler in der durch den GNSS-Sensor (33) gemessenen Fahrzeugposition zu korrigieren.

2. Die Fehlerkorrekturvorrichtung (34) und das Arbeitsfahrzeug (1) gemäß Anspruch 1, wobei

   das Arbeitsfahrzeug (1) eine Arbeitsmaschine (41) aufweist, die einer Höhensteuerung unterliegt, um mit einem landwirtschaftlichen Feld in Kontakt gebracht zu werden,
   eine Achse des Sensorkoordinatensystems in die vertikale Richtung des Arbeitsfahrzeugs gerichtet ist,
   die eingestellte Position vorab auf eine Position eingestellt wird, die erhalten wird, indem die Messposition auf die Oberfläche des landwirtschaftlichen Feldes projiziert wird,
   die Fehlerkorrekturvorrichtung (34) ferner aufweist:

   einen zweiten Erfassungsteil (343), der ausgebildet ist, einen bei der Höhensteuerung der Arbeitsmaschine (41) verwendeten Höhenbetrag zu erfassen; und
   einen Eingestellte-Positions-Korrekturteil (344), der ausgebildet ist, die eingestellte Position basierend auf dem erfassten Höhenbetrag zu korrigieren, und
   der Koordinatentransformationsteil (345) ausgebildet ist, einen relativen Positionsvektor der Messposition, der sich von der korrigierten eingestellten Position erstreckt, koordinaten-zu-transformieren.

3. Die Fehlerkorrekturvorrichtung (34) und das Arbeitsfahrzeug (1) gemäß Anspruch 1 oder 2, wobei

   der erste Erfassungsteil (341) ferner ausgebildet ist, einen Geschwindigkeitsvektor des Arbeitsfahrzeugs (1) in dem lokalen Koordinatensystem zu erfassen, wobei der GNSS-Sensor (33) ausgebildet ist, den Geschwindigkeitsvektor zu messen,
   der Koordinatentransformationsteil (345) ferner ausgebildet ist, einen Rotationswinkelgeschwindigkeitsvektor des Arbeitsfahrzeugs (1) in dem Sensorkoordinatensystem, wobei die Rotationswinkelgeschwindigkeit auf der erfassten Winkelgeschwindigkeit basiert, in einen Rotationswinkelgeschwindigkeitsvektor in dem lokalen Koordinatensystem basierend auf der erfassten Winkelgeschwindigkeit koordinaten-zu-transformieren, und
   die Fehlerkorrekturvorrichtung (34) ferner einen Geschwindigkeitsvektorkorrekturteil (347) aufweist, der ausgebildet ist, einen Geschwindigkeitsvektor des Arbeitsfahrzeugs (1) an der eingestellten Position gemäß einem Ausdruck $V_a = V_s - \omega \times L$ zu berechnen, wobei $V_s$ einen Geschwindigkeitsvektor des Arbeitsfahrzeugs an der Messposition bezeichnet, $V_a$ einen Geschwindigkeitsvektor des Arbeitsfahrzeugs an der eingestellten Position bezeichnet, und $\omega$ den koordinatentransformierten Rotationswinkelgeschwindigkeitsvektor bezeichnet, um den Geschwindigkeitsvektor des Arbeitsfahrzeugs (1), den der GNSS-Sensor zu messen ausgebildet ist, zu korrigieren.

4. Die Fehlerkorrekturvorrichtung (34) und das Arbeitsfahrzeug (1) gemäß einem der Ansprüche 1 bis 3, wobei die Fehlerkorrekturvorrichtung (34) ferner ein erstes Tiefpassfilter (342a) umfasst, das ausgebildet ist, ein Hochfrequenzsignal, das höher als eine voreingestellte erste Grenzfrequenz ist, in einem Zeitreihensignal einer von dem Gyrosensor (31) gemessenen Winkelgeschwindigkeit zu reduzieren, und

der Koordinatentransformationsteil ausgebildet ist, den relativen Positionsvektor basierend auf der Winkelgeschwindigkeit, in der das Hochfrequenzsignal reduziert wurde, koordinaten-zu-transformieren.

5. Die Fehlerkorrekturvorrichtung (34) und das Arbeitsfahrzeug (1) gemäß Anspruch 4, wobei

das Sensorbauelement ferner einen Beschleunigungssensor (32) aufweist, und
die Fehlerkorrekturvorrichtung (34) ferner ein zweites Tiefpassfilter (342b) aufweist, das ausgebildet ist, ein Hochfrequenzsignal, das höher als eine voreingestellte zweite Grenzfrequenz ist, in einem Zeitreihensignal einer von dem Beschleunigungssensor (32) gemessenen Beschleunigung zu reduzieren.

## Revendications

1. Dispositif de correction d'erreur (34) et véhicule de travail (1), dans lequel le dispositif de correction d'erreur (34) est monté dans le véhicule de travail (1) et configuré pour corriger une erreur de valeur de mesure d'un dispositif de capteur ayant un capteur GNSS (33) et un capteur gyroscopique (31), le dispositif de correction (34) comprenant : une première partie d'acquisition (341) qui est configurée pour acquérir une position de véhicule du véhicule de travail dans un système de coordonnées local, le capteur GNSS (33) étant configuré pour mesurer la position de véhicule, et une vitesse angulaire dans un système de coordonnées de capteur ayant trois axes définis par rapport au dispositif de capteur, le capteur gyroscopique (31) étant configuré pour mesurer la vitesse angulaire, **caractérisé en ce que** le dispositif de correction (34) comprend en outre :

une partie de transformation de coordonnées (345) qui est configurée pour transformer en coordonnées, sur la base de la vitesse angulaire acquise, un vecteur de position relative d'une position de mesure dans le système de coordonnées de capteur auquel le dispositif de capteur est fourni, le vecteur de position relative s'étendant d'une position définie qui est définie à une position différente de la position du dispositif de capteur dans le système de coordonnées de capteur, à un vecteur de position relative dans le système de coordonnées local ; et
une partie de correction de position de véhicule (346) qui est configurée pour calculer un vecteur de position $P_a$ de la position définie s'étendant à partir d'une origine du système de coordonnées local selon une expression de $P_a = P_s - L$, dans laquelle $P_s$ désigne un vecteur de position de la position de mesure et L désigne le vecteur de position relative transformé en coordonnées, pour corriger une erreur dans la position de véhicule mesurée par le capteur GNSS (33).

2. Dispositif de correction d'erreur (34) et véhicule de travail (1) selon la revendication 1, dans lequel

le véhicule de travail (1) comporte une machine de travail (41) soumise à un contrôle d'élévation de manière à être mise en contact avec un champ agricole,
un axe du système de coordonnées de capteur est dirigé dans la direction verticale du véhicule de travail,
la position définie est définie à l'avance sur une position obtenue en projetant la position de mesure sur la surface du champ agricole,
le dispositif de correction d'erreur (34) comporte en outre :

une deuxième partie d'acquisition (343) qui est configurée pour acquérir une quantité d'élévation utilisée dans la commande d'élévation de la machine de travail (41) ; et
une partie de correction de position définie (344) qui est configurée pour corriger la position définie sur la base de la quantité d'élévation acquise, et
la partie de transformation de coordonnées (345) est configurée pour transformer en coordonnées un vecteur de position relative de la position de mesure qui s'étend à partir de la position définie corrigée.

3. Dispositif de correction d'erreur (34) et véhicule de travail (1) selon la revendication 1 ou 2, dans lequel

la première partie d'acquisition (341) est en outre configurée pour acquérir un vecteur vitesse du véhicule de travail (1) dans le système de coordonnées local, le capteur GNSS (33) étant configuré pour mesurer le vecteur vitesse,
la partie de transformation de coordonnées (345) étant en outre configurée pour transformer en coordonnées un vecteur de vitesse angulaire de rotation du véhicule de travail (1) dans le système de coordonnées de capteur, la vitesse angulaire de rotation étant basée sur la vitesse angulaire acquise, en un vecteur de vitesse angulaire de rotation dans le système de coordonnées local basé sur la vitesse angulaire acquise, et

le dispositif de correction d'erreur (34) comporte en outre une partie de correction de vecteur vitesse (347) configurée pour calculer un vecteur vitesse du véhicule de travail (1) à la position définie selon une expression de $V_a = V_s - \omega \times L$, dans laquelle $V_s$ désigne un vecteur vitesse du véhicule de travail à la position de mesure, $V_a$ désigne un vecteur vitesse du véhicule de travail à la position définie, et $\omega$ désigne le vecteur de vitesse angulaire de rotation transformé en coordonnées, pour corriger le vecteur vitesse du véhicule de travail (1) que le capteur GNSS est configuré pour mesurer.

4. Dispositif de correction d'erreur (34) et véhicule de travail (1) selon l'une des revendications 1 à 3, dans lequel le dispositif de correction d'erreur (34) comprend en outre un premier filtre passe-bas (342a) qui est configuré pour réduire un signal haute fréquence supérieur à une première fréquence de coupure prédéfinie dans un signal de série temporelle d'une vitesse angulaire mesurée par le capteur gyroscopique (31), et

la partie de transformation de coordonnées étant configurée pour transformer en coordonnées le vecteur de position relative sur la base de la vitesse angulaire dans laquelle le signal haute fréquence a été réduit.

5. Dispositif de correction d'erreur (34) et véhicule de travail (1) selon la revendication 4, dans lequel

le dispositif de capteur comporte en outre un capteur d'accélération (32), et

le dispositif de correction d'erreur (34) comprend en outre un deuxième filtre passe-bas (342b) qui est configuré pour réduire un signal haute fréquence supérieur à une deuxième fréquence de coupure prédéfinie dans un signal de série temporelle d'une accélération mesurée par le capteur d'accélération (32).

# FIG.1

# FIG.2

Vehicle position and
travelling direction

| Automatic steering controller | 21 |

Steering angle

| Steering wheel angle controller | 22 |

| Link mechanism | 42 | Elevation drive device | 45 |

Elevation amount 46

| Grounding sensor | 43 | Elevation controller | 34 |

Elevation amount

Motor 172    Encoder 173

Transmission shaft 171

Steering drive device 17

| Error correcting device |

| Gyro sensor 31 | Acceleration sensor 32 | GNSS sensor 33 |

Sensor device 30

Input shaft

Steering system 151

# FIG.3

```
┌──────────────┐        ┌──────────────┐        ┌──────────────┐
│   Storage    │────────│     CPU      │────────│     RAM      │
│   device     │        │              │        │              │
└──────────────┘        └──────────────┘        └──────────────┘
      ⌇                        ⌇                        ⌇
      93                       91                       92
                               │
                        ┌──────────────┐
                        │ External I/F │
                        └──────────────┘
                               ⌇                              34
                               94
```

# FIG.4

```
┌──────────────┐         ┌──────────────┐
│    First     │────────▶│Vehicle position│
│ acquisition  │         │ correcting part│
│    part      │         │              │
└──────────────┘         └──────────────┘
       ⌇                        ⌇
      341                      346
       │                        ▲
       ▼                        │
┌─────────────────┐      ┌──────────────┐      ┌──────────────┐
│ ┌─────────────┐ │      │  Coordinate  │      │Velocity vector│
│ │ First low-  │ │─────▶│transformation│─────▶│correcting part│
342a─│ │ pass filter │ │      │    part      │      │              │
│ └─────────────┘ │      └──────────────┘      └──────────────┘
│ ┌─────────────┐ │             ⌇                     ⌇
│ │   Second    │ │            345                   347
342b─│ │  low-pass   │ │             ▲
│ │   filter    │ │             │
│ └─────────────┘ │      ┌──────────────┐
└─────────────────┘      │ Set position │              34
       ⌇                 │ correcting   │
      342                │    part      │
                         └──────────────┘
                                ⌇
                               344
                                ▲
                                │
                         ┌──────────────┐
                         │   Second     │
                         │ acquisition  │
                         │    part      │
                         └──────────────┘
                                ⌇
                               343
```

# FIG.5

```
              ┌─────────┐
              │  START  │
              └─────────┘
                   │
                   ▼
        ┌──────────────────────┐
        │ Acquire vehicle position │
        │ and velocity vector      │
        └──────────────────────┘
                   │  S101
                   ▼
        ┌──────────────────────┐
        │ Acquire angular velocity │
        │ and acceleration         │
        └──────────────────────┘
                   │  S102
                   ▼
        ┌──────────────────────┐
        │  Reduce high frequency   │
        └──────────────────────┘
                   │  S103
                   ▼
        ┌──────────────────────┐
        │ Acquire elevation amount │
        └──────────────────────┘
                   │  S104
                   ▼
        ┌──────────────────────┐
        │   Correct set position   │
        └──────────────────────┘
                   │  S105
                   ▼
        ┌──────────────────────┐
        │ Coordinate-transform     │
        │ relative position vector │
        └──────────────────────┘
                   │  S106
                   ▼
        ┌──────────────────────┐
        │ Correct vehicle position │
        └──────────────────────┘
                   │  S107
                   ▼
        ┌──────────────────────┐
        │ Coordinate-transform     │
        │ angular velocity vector  │
        └──────────────────────┘
                   │  S108
                   ▼
        ┌──────────────────────┐
        │ Correct velocity vector  │
        └──────────────────────┘
                   │  S109
                   ▼
              ┌─────────┐
              │   END   │
              └─────────┘
```

# FIG.6

# FIG.7

# FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018120364 A
- EP 2980668 A1
- US 2017350721 A1
- US 2009164067 A1
- WO 2017208306 A1
- US 2007260370 A1
- US 2008195268 A1